(19) Europäisches Patentamt European Patent Office Office européen des brevets

(11) **EP 4 756 782 A1**

(12) **EUROPEAN PATENT APPLICATION**

(43) Date of publication:
**10.06.2026 Bulletin 2026/24**

(21) Application number: **25218470.0**

(22) Date of filing: **25.11.2025**

(51) International Patent Classification (IPC):
*G09B 9/00* *(2006.01)*

(52) Cooperative Patent Classification (CPC):
**G09B 9/003**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **06.12.2024 US 202463729128 P**

(71) Applicant: **Babcock IP Management (Number One) Limited**
**London W1U 1QX (GB)**

(72) Inventors:
 • **POTTS, Alexander John**
  **London (GB)**
 • **FLEMING, Freya**
  **London (GB)**
 • **MARSH, Harry Craig**
  **London (GB)**
 • **WESTLAKE, Joshua Paul Anthony**
  **London (GB)**
 • **JOHNSTON, Matthew**
  **London (GB)**
 • **EVANS, Meirion David**
  **London (GB)**
 • **GREEN, Mikaela**
  **London (GB)**
 • **PATEL, Tasneem**
  **London (GB)**
 • **MARSH, Thomas**
  **London (GB)**

(74) Representative: **Barker Brettell LLP**
 **100 Hagley Road**
 **Edgbaston**
 **Birmingham B16 8QQ (GB)**

(54) **SYSTEMS AND METHODS FOR IMMERSIVE TRAINING EXPERIENCES**

(57) According to one aspect of the present disclosure, a system for providing immersive training experiences can include a training room (202) and a control room (201). The training room can include one or more physical effects units configured to apply physical effects to the training room; one or more spatial audio units (204) configured to apply spatial audio to the training room; one or more audio capture units (205); one or more video recording units (206); and a workstation accessible by a first user to complete a training task. The control room can include an effects interface (208) configured to allow a second user to control the one or more physical effects units and the one or more spatial audio units; an evaluation interface (209) configured to receive and display data feeds from the one or more audio capture units and the one or more video recording units.

*FIG. 2*

**EP 4 756 782 A1**

**Description**

CROSS-REFERENCE TO RELATED APPLICATIONS

This application claims priority to U.S. Provisional Application No. 63/729,128, filed December 6, 2024, which is herein incorporated by reference in its entirety.

BACKGROUND OF THE DISCLOSURE

In an increasingly complex and contested world, where the threat of war, natural disasters and geopolitical instability is constant, the preparation of operational commanders and specialists to face emerging and dynamic challenges is of paramount importance.

In both defense and resilience domains, training should evolve to produce challenging, technologically enabled, and realistic environments to deliver high performance individuals and teams. This ensures they are prepared for the realities of modern conflict and multifaceted national resilience scenarios.

With omnipresent media coverage, worldwide operations are conducted in the public eye, layering external pressures to already complex situations. Operators are under increased scrutiny and pressure to perform to the highest standards.

However, existing training systems are generally not optimal solutions and leave much to be desired. For example, many existing systems are not integrated with physical effects and camera and sensor feeds, nor are they flexible or scalable such that differing requirements can be met, and emerging technologies can be integrated. Moreover, data analysis capabilities are consistently lacking, and the remote control of such systems does not generally exist.

SUMMARY OF THE INVENTION

According to one aspect of the present disclosure, a system for providing immersive training experiences can include a training room and a control room. The training room can include one or more physical effects units configured to apply physical effects to the training room; one or more spatial audio units configured to apply spatial audio to the training room; one or more audio capture units; one or more video recording units; and a workstation accessible by a first user to complete a training task. The control room can include an effects interface configured to allow a second user to control the one or more physical effects units and the one or more spatial audio units; an evaluation interface configured to receive and display data feeds from the one or more audio capture units and the one or more video recording units.

In some embodiments, the one or more physical effects units can include at least one of a seismic simulation unit, an odor effects unit, a theatrical effects unit, a lighting unit, or a smoke creation unit. In some embodiments, the training room is located adjacent to and borders the control room. In some embodiments, the training room borders the control room via a soundproof wall. In some embodiments, the control room further can include a climate control system; and the effects interface is configured to allow the second user to control the climate control system. In some embodiments, the one or more video recording units can include a camera capable of vision in complete darkness either by infrared illumination, thermal, or a combination of both.

According to another aspect of the present disclosure, a method for providing immersive training experiences can include initiating, by a controller in a control room, an immersive training experience in a training room comprising a workstation accessible by a first user to complete a training task; receiving, by the controller, an input from a second user to control a physical effects unit and a spatial audio unit in the training room; activating, by the controller, the physical effects unit and the spatial audio unit based on the input; receiving, by the controller, data feeds from an audio capture unit and a video recording unit in the training room and a biometric sensor worn by the first user; and displaying, by the controller, the data feeds on a user interface in the control room.

In some embodiments, the method can include synchronizing, by the controller, the received data feeds; and displaying, by the controller, the synchronized data feeds on the user interface in the control room. In some embodiments, displaying, by the controller, the synchronized data feeds on the user interface in the control room can include compiling the synchronized data feeds into a timeline view. In some embodiments, receiving the input from the second user to control the physical effects unit and the spatial audio unit in the training room can include receiving a selection of a scenario definition, the scenario definition comprising a pre-defined combination of physical and spatial audio effects.

In some embodiments, the method can include generating, by the controller, a training recommendation for the first user based on the data feeds; and displaying, by the controller, the training recommendation on the user interface in the control room.

According to another aspect of the present disclosure, a computing system can include a processor and a non-transitory computer-readable storage device storing computer-executable instructions. The instructions, when executed by the processor, cause the processor to perform operations. The operations can include initiating, by a controller in a control room, an immersive training experience in a training room comprising a workstation accessible by a first user to complete a training task; receiving, by the controller, an input from a second user to control a physical effects unit and a spatial audio unit in the training room; activating, by the controller, the physical effects unit and the spatial audio unit based on the input; receiving, by the controller, data feeds from an audio capture unit and a video recording unit in the training room and a biometric sensor worn by the first user; and displaying, by the controller, the data feeds on a user interface in the control room.

In some embodiments, the operations can include synchronizing, by the controller, the received data feeds; and displaying, by the controller, the synchronized data feeds on the user interface in the control room. In some embodiments, displaying, by the controller, the synchronized data feeds on the user interface in the control room can include compiling the synchronized data feeds into a timeline view. In some embodiments, receiving the input from the second user to control the physical effects unit and the spatial audio unit in the training room can include receiving a selection of a scenario definition, the scenario definition comprising a pre-defined combination of physical and spatial audio effects.

In some embodiments, the operations can include generating, by the controller, a training recommendation for the first user based on the data feeds; and displaying, by the controller, the training recommendation on the user interface in the control room.

Aspects and embodiments of the invention are defined in the claims. Feature(s) of the aspects/embodiments of the invention or features otherwise disclosed herein may be used separately, together and/or be interchangeable wherever possible. Where features are, for brevity, described in the context of a single embodiment, those features may also be provided separately or in any suitable sub-combination. Features described in connection with the system(s), computing system(s) or any feature(s) or component(s) described may have corresponding features definable and/or combinable with respect to a method or vice versa, and these embodiments are specifically envisaged.

**BRIEF DESCRIPTION OF THE FIGURES**

FIG. 1 is an example immersion training module according to example embodiments of the present disclosure.

FIG. 2 is another example immersion training module according to example embodiments of the present disclosure.

FIG. 3 is an example bespoke immersion training module according to example embodiments of the present disclosure.

FIG. 4 is another example bespoke immersion training module according to example embodiments of the present disclosure.

FIG. 5 is an example triple immersion training module according to example embodiments of the present disclosure.

FIGS. 6A-6B show outer isometric views of an immersion training module according to some embodiments of the present disclosure.

FIG. 7 is a block diagram of an example immersion control system according to some embodiments of the present disclosure.

FIG. 8 is a flowchart of an example process for controlling an immersion training module according to some embodiments of the present disclosure.

FIG. 9 is a flowchart of an example process for generating training recommendations according to some embodiments of the present disclosure.

FIGS. 10-13 show example user interfaces of an immersion control system according to some embodiments of the present disclosure.

FIG. 14 is a server device that can be used within the system of FIG. 7 according to an embodiment of the present disclosure.

FIG. 15 is an example computing device that can be used within the system of FIG. 7 according to an embodiment of the present disclosure.

The drawings are not necessarily to scale, or inclusive of all elements of a system, emphasis instead generally being placed upon illustrating the concepts, structures, and techniques sought to be protected herein.

**DESCRIPTION**

The following detailed description is merely exemplary in nature and is not intended to limit the claimed invention or the applications of its use.

The disclosed system can bridge the gap between sterile classroom environments and complex live operations - creating an immersive training experience which prepares personnel for the most challenging situations. Moreover, the disclosed system can prepare and test trainees in the most demanding of circumstances, whilst also being a safe to fail and entirely controlled, low-risk training solution.

Embodiments of the present disclosure relate to systems and methods for providing immersive training experiences. The disclosed embodiments can utilize a combination of theatre realism, dynamic control features, full data capture, and adaptable design, enabling a future-proof solution for modern training needs. The disclosed system is a modular, deployable, training solution that is adaptable to answer various bespoke training requirements. Each immersion training module can generally include a training room and a control room. In some embodiments, the training room can utilize accurate environmental, information, and scenario effectors to replicate the cognitive and physical intensity of real operational scenarios. Such a room can deliver scientifically designed effects to deliver realistic and immersive training. Moreover, data capture from inside the training room provides remote observation, control, and analysis of training from the control room. In addition, the control room can dynamically adjust the scenario to deliver enhanced training outcomes. The control can also harness and analyze captured training data to deliver live and objective feedback to evaluating users. Training data can be stored and utilized for trend analysis to gain insights across individuals, teams, and entire organizations.

In some embodiments, the training room can provide, in a manner that is controlled via one or more workstations in the control room, soundscapes, seismic simulation, climate control, generated aromas, and visual and information stimuli to prepare users for the physical and cognitive stresses of operations. The disclosed system can replicate real-time operationally accurate scenarios - all while sensors monitor biometrics and user performance.

In some embodiments, soundscapes can include a control system PC with the control system software that uses OSC protocol to communicate with another computer on the network which hosts an audio library. This second computer can use a software package to manage the media playback by sending the audio either over the network, by USB, or by optical cable to a digital audio controller where the audio signals are further distributed via audio cable to amplifier units and on to speakers as well as networked amplifiers and speakers by using the AES67 protocol.

In some embodiments, a seismic simulation can include a control system PC with the control system software that uses OSC protocol to communicate with another computer on the network which hosts an audio library. The second computer can use a software package to manage the media playback by sending the audio either over the network, by USB, or by optical cable to a digital audio controller where the audio signals are further distributed via audio cable to amplifier units and on to haptic transducers as well as networked amplifiers and haptic transducers by using the AES67 protocol.

In some embodiments, climate control can be implemented by using either direct equipment or wireless manufacturer controls, or a control system PC with the control system software. HVAC units can be controlled to raise or lower the temperature within the training room to affect the training audience. These HVAC units can be fitted into the structure or positioned remotely and ducted into the training room.

In some embodiments, fragrances/aromas can include a control system PC with the control system software that uses Artnet protocol to communicate with a RDM/DMX streaming device, which in turn communicates using DMX protocol to fragrance emitting machines. This enables the operator in the control room to activate various fragrances in line with the training session being delivered.

In some embodiments, lighting can include a control system PC with the control system software that uses Artnet protocol to communicate with a RDM/DMX streaming device, which in turn communicates using DMX protocol to a lighting controller and on to fitted lighting within the training room. This lighting can be ceiling mounted, wall mounted, desk mounted or wireless. In some embodiments, this interfaces with proprietary removable equipment that represents a ships control centre panel, operational switchgear and matrix lighting effects.

In some embodiments, certain physical effects can include a control system PC with the control system software that uses Artnet protocol to communicate with a RDM/DMX streaming device, which in turn communicates using DMX protocol to a controllable power source. This power source is then used to energise actuators and electromagnets within the training room, which in turn control motion and actuation. These can include lighting pendant motion, falling shelves, falling roof tiles, falling dust particles of various sizes, falling pictures and collapsing furniture items.

In some embodiments, visual and informational stimuli can include a control system PC with the control system software that uses OSC protocol to communicate with another computer on the network which hosts an media/video library. The second computer can use a software package to manage the media playback by sending the video/image feeds either over the network, by USB, by HDMI, or by DisplayPort to display screen equipment within the training room.

In some embodiments, haze can include a control system PC with the control system software that uses Artnet protocol to communicate with a RDM/DMX streaming device, which in turn communicates using DMX protocol to haze emitting machines. This enables the operator in the control room to activate various levels of haze in line with the training session being delivered.

In some embodiments, combined effects can include a control system PC with the control system software that uses Artnet protocol to communicate with a RDM/DMX streaming devices, and OSC protocol to communicate with another computer on the network which hosts the video/audio/image library simultaneously in a pre-programmed and operator controlled reactive manner. This allows the operator in the training room to employ all of the above stimuli to prepare users for the physical and cognitive stresses of operations.

In some embodiments, the immersive nature of training can help build enduring memories and reduce the shock that can paralyze poorly prepared teams. It can bridge the disparity between sterile training and the intensity of live operations.

Moreover, the disclosed system can promote rapid skill acquisition as trainers can tailor training to user needs. By delivering live and objective feedback, the system enables users to critically analyze and reflect on their performance, placing the learner at the center of this training solution.

In addition, the disclosed system has a modular design that leads to great flexibility and adaptability. Such a modular design makes it an adaptable solution which can meet any style or scale of training. The aesthetics, effects, and system can be tailored according to bespoke training requirements. Finally, the system can utilize agnostic technologies to enable integration of users' current and developing systems, providing a future-proof solution, and it is designed to integrate across the Live, Virtual and Constructive (LVC) domains to enable dispersed and dislocated training across organizations and locations.

In terms of data capture, the disclosed system can capture and analyze a range of training data, including biometrics, visual, audio, and geo-tracking data to increase training efficiency and outcomes. In some embodiments, the captured data can be made available instantly (i.e., "live") to users to enable enhanced, time stamped after-action reviews and promote rapid skill acquisition. Training data can be available for users to review, reflect, and evaluate, which can promote self-learning and accountability, whilst allowing trainers to focus serials on key areas previously identified. Moreover, individual, team, and organization data can be analyzed for trends and insights to tailor future training to meet specific needs.

The capture and harnessing of such training data can greatly increase the ability to provide objective and meaningful insights to users, enhancing analysis and producing rapid training development. In addition, the ability to pause, analyze, and repeat training in real-time promotes rapid skill acquisition as users are required to problem solve within dynamic scenarios. The ability to safely replicate and control high-intensity environments exposes users to the most challenging training scenarios, which provides inoculation to the most challenging and high-pressure scenarios found across defense and resilience landscapes. The disclosed immersive and realistic experiences can enhance learning retention and overall training value.

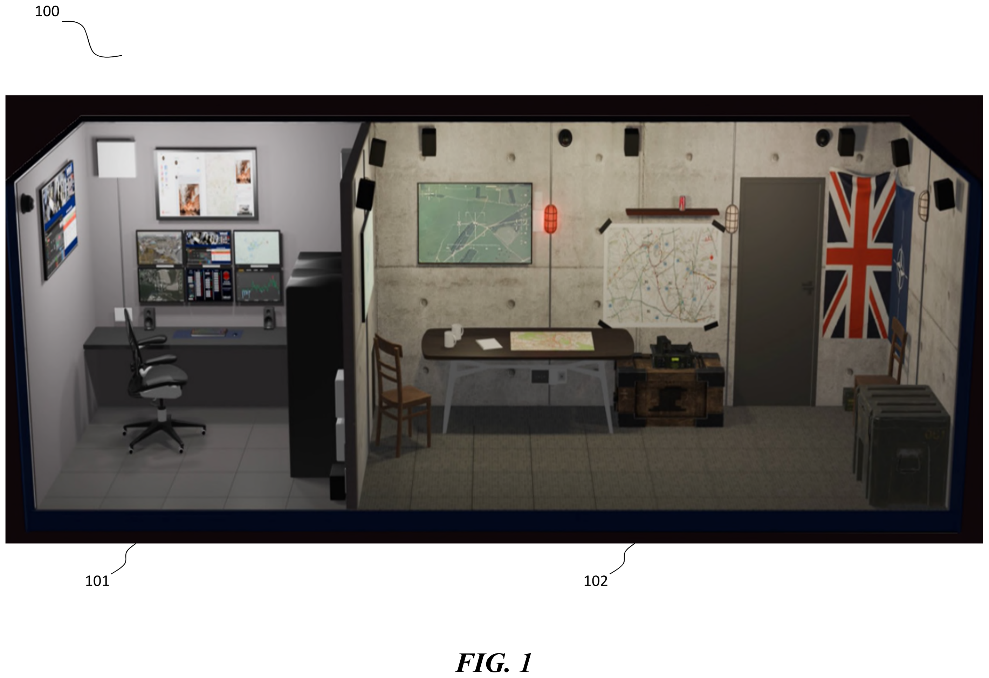

FIG. 1 is an example immersion training module 100 according to example embodiments of the present disclosure. The module 100 can include a control room 101 and a training room 102. A user (i.e., a trainee) can be placed within the training room 102 to perform various training tasks, such as for the military or other emergency response type organizations. For example, the user may perform certain planning activities, such as troop movements and the like. Meanwhile, one or more operating users can be placed in the control room 101 to control the environment within the training room 102 and monitor the performance of the user performing the training task, which can be performed at a workstation. The training room 102 can utilize various accurate environmental, information and scenario effectors to replicate the cognitive and physical intensity of real operational environments. In some embodiments, environmental effects within the training room 102 can be delivered via specifically layered soundscapes, seismic simulations, climate control, visual stimuli, and generated aromas to layer additional complexity to training. In addition, information and scenario specific injects can be introduced to dynamically control training and ensure each session is unique. User specified communication, IT, and management systems are integrated to manage training objectives and cognitive pressure on users. Such effects (both physical and information-specific) can be controlled by devices and interfaces within the control room 101.

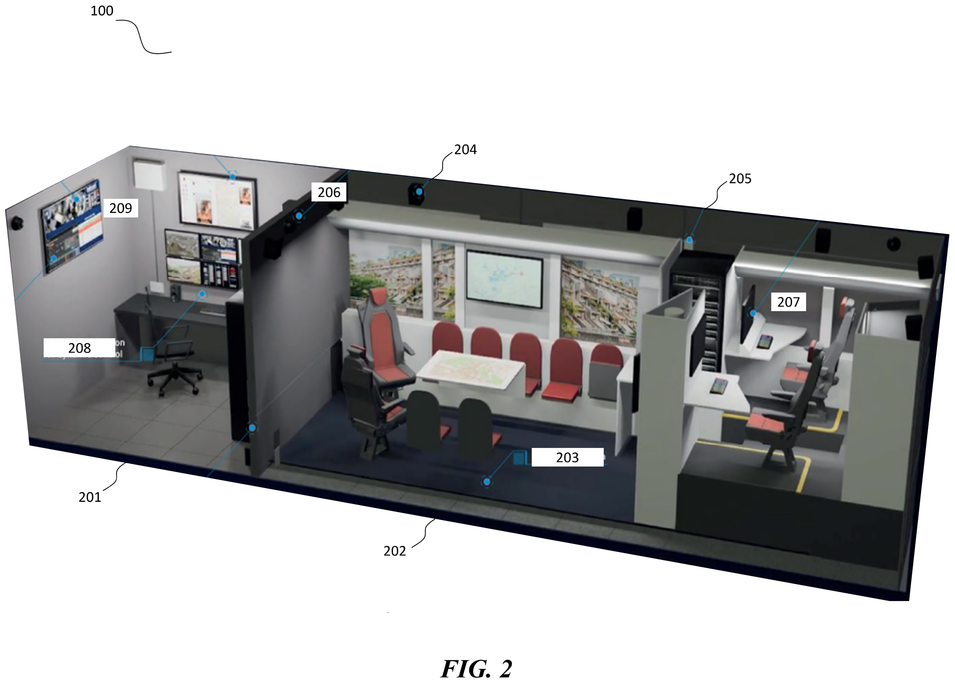

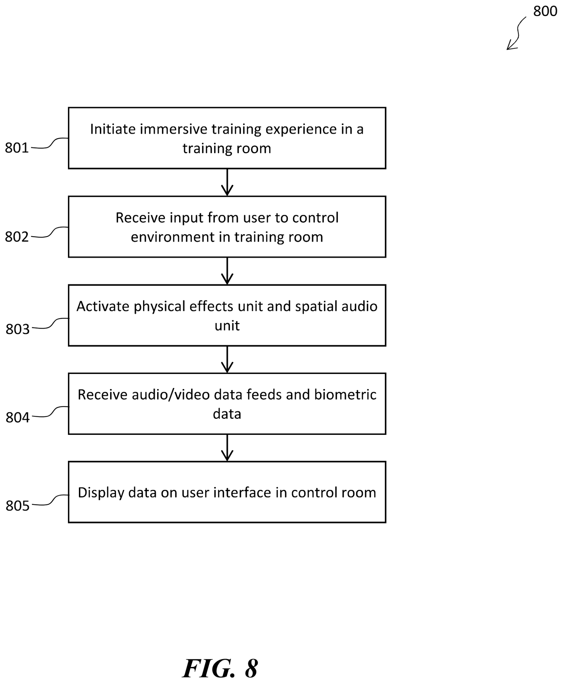

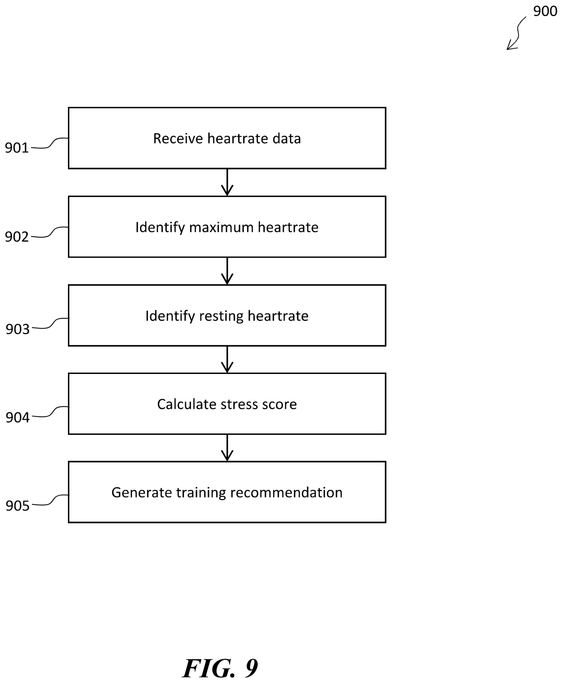

FIG. 2 is another example immersion training module 200 according to example embodiments of the present disclosure. Similar to the module 100 of FIG. 1, the module 200 can include a control room 201 and a training room 202. The training room 202 can include various seismic simulation units 203, spatial audio units 204, audio capture devices 205, a video recording unit 206, and integrated operational equipment 207. In some embodiments, the seismic simulation units 203 are configured to apply various vibrations to the training room 202. In addition, the spatial audio units 204 are configured to play sounds in a spatial or surround sound manner to the training room 202. In some embodiments, the training room 202 can include additional units for introducing physical effects, such as aroma injectors, lighting units, smoke units, and other theatrical effects units (e.g., falling furniture, shelf drops, etc.). In addition, the training room 202 can include a climate control system to alter humidity and temperature within the training room 202. In some embodiments, the various disclosed physical effects units and audio units can be controlled via an effects interface 208 located in the control room 201. Additional details related to the control of the training room 202 from the control room 201 are discussed in relation to FIGS. 8 and 9. In some embodiments, the control room 201 and the training room 202 can be adjacent to each other but separated by a soundproof wall. In some embodiments, the video recording unit 206 can include both a day and night vision camera. In some embodiments, an additional video recording unit can be included that is attached or mounted on a trainee, which can transmit live video via the systems wireless network to the control room 201.

In some embodiments, the integrated operational equipment 207 can include a workstation (e.g., computer station, computing device, etc.) where a trainee user can be assigned to perform a training task that will be evaluated by evaluating users in the control room 201. In some embodiments, the evaluating users can access an evaluation interface 209 within the control room 201 to visualize and evaluate the trainee's performance. For example, the trainee may be wearing one or more devices that include biometric sensors to measure and record biometric data, which can be transmitted to the evaluation interface 209 for analysis within the control room 201.

The control room 201 can include various computers (e.g., the devices that execute and run the effects interface 208 and the evaluation interface 209) that utilize control systems software to enable the physical effects within the training room 202, such as via one or more amplifiers. In some embodiments, such a control system can be a cross-platform Windows® and Android® application with a user interface and both local and cloud databases. In some embodiments, the effects interface 208 can enable an operator to activate various theatrical effects such as spatial sounds, lighting, and vibrations into the training room 202 to build realism into the training scenario. The effects interface 208 can also trigger odors and haze into the room remotely from the control room or remotely from other locations. In some embodiments, the effects interface 208 can enable users to fully control the training scenario by starting, pausing, and stopping training at any point with safety features built in such as all stop and provide warnings for safety concerns. Moreover, the evaluation interface 209 can enable the operators to tag events within the training data and add comments to deliver enhanced feedback to trainees and provide analysis of behavioral trends to deliver repeatable and customized training. In some embodiments, the evaluation interface 209 can collate and store captured video images and audio capture from the training room 202 to build and export an after-action review allowing the exercise director to identify trends and behaviors. Users can build their own dashboards within the evaluation interface 209 to create a specific training scenario suited to their needs. In addition, the control system has been designed to communicate between multiple modules to enable geographically dispersed joint activities.

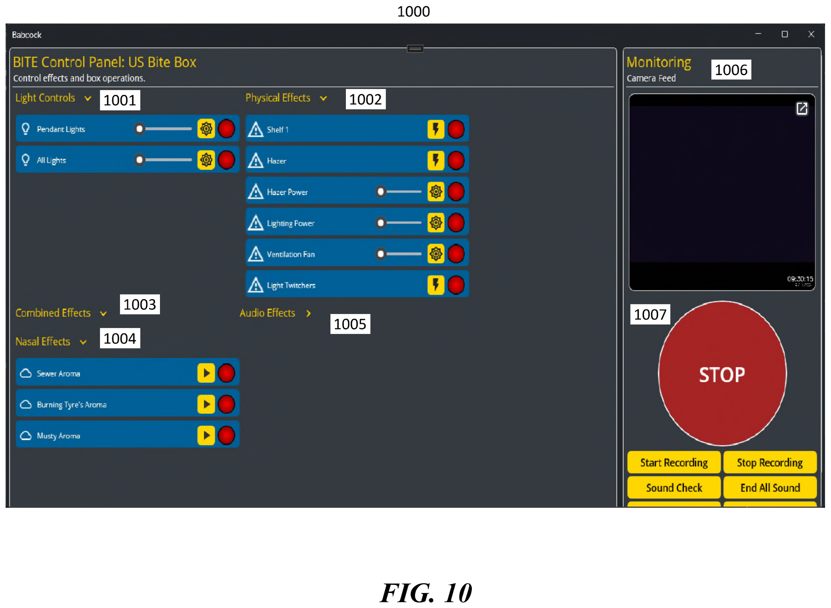

In some embodiments, the evaluation interface 209 can include a training session dashboard, where an operator can view live and historic immersive training sessions including session status, camera feeds and trainee status. In addition, the evaluation interface 209 can include a training session view, where operators can view live data on current training session and have access to the scenario dashboard to trigger effects within the training room 202. In some embodiments, the evaluation interface 209 can also include a training session timeline, where the operator can view scheduled and past effects, add observer comments and highlight key moments. Additional details related to the evaluation interface 209 are discussed in relation to FIGS. 10-13. For example, the evaluation interface 209 multiplexed camera feeds with overlays.

In some embodiments, the effects interface 208 can allow for physical effect control via digital multiplexing (DMX) and open sound control (OSC) protocols; this can also include editing and adding new effects. Moreover, encrypted local SQL database and secure Azure cloud SQL database with intelligent syncing, enabling operation without an internet connection and remote access/control over multiple assets with an internet connection.

In some embodiments, the communications between the effects interface 208, the evaluation module 209, and the various devices within the training room 202 can be encrypted.

In some embodiments, sound control can be effected by using the AES67 protocol along with OSC

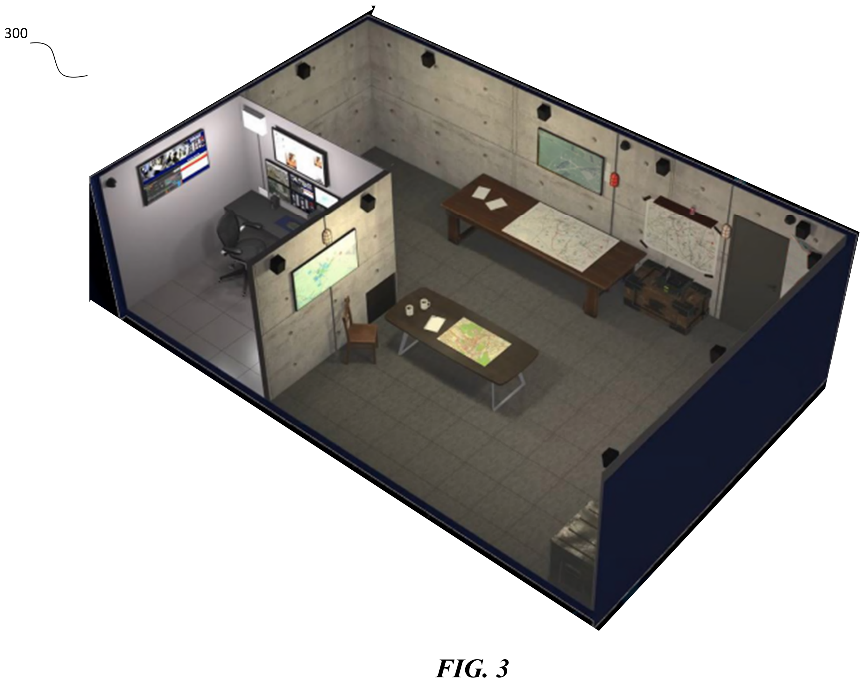

FIG. 3 is an example bespoke immersion training module 300 according to example embodiments of the present disclosure. The bespoke module 300 can include a large training room than the module 200 of FIG. 2 and illustrates the flexibility and modularity in design of the disclosed embodiments.

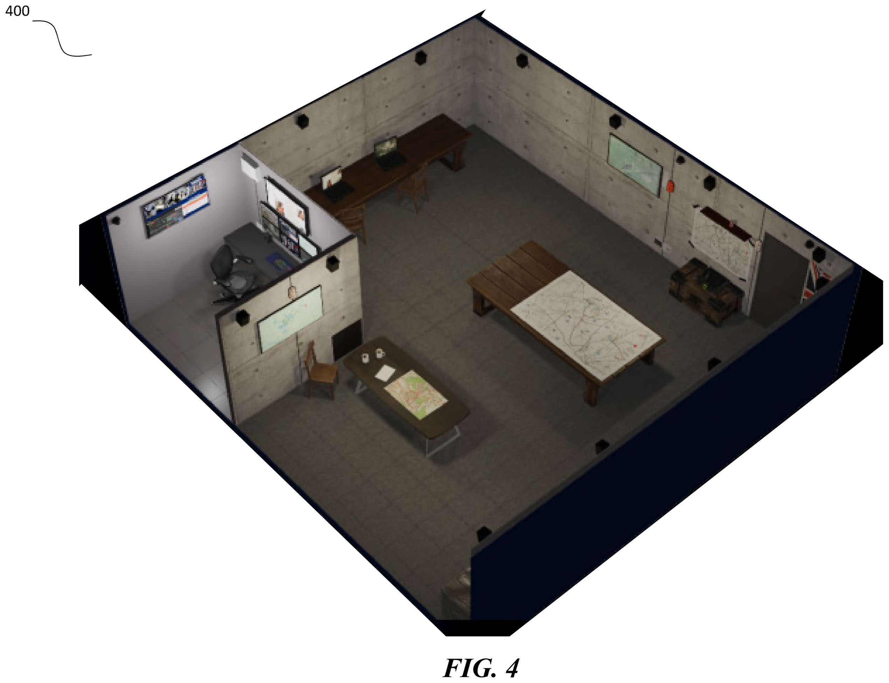

FIG. 4 is another example bespoke immersion training module 400 according to example embodiments of the present disclosure. The bespoke module 400 can include a large training room than the module 200 of FIG. 2 and illustrates the flexibility and modularity in design of the disclosed embodiments.

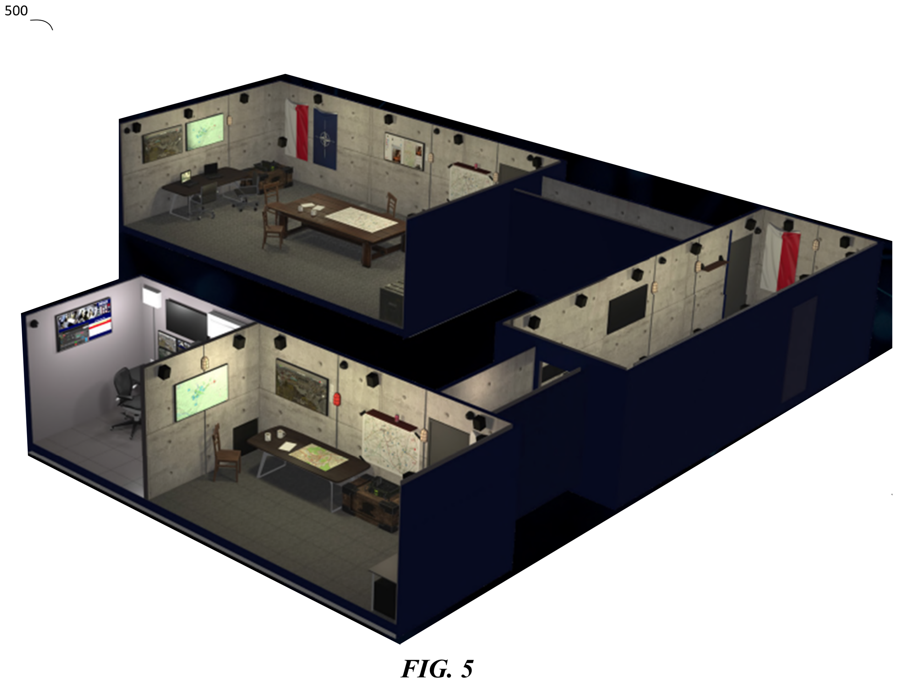

FIG. 5 is an example triple immersion training module according to example embodiments of the present disclosure. The triple module 500 can include a multiple training rooms interconnected by various hallways and further illustrates the flexibility and modularity in design of the disclosed embodiments.

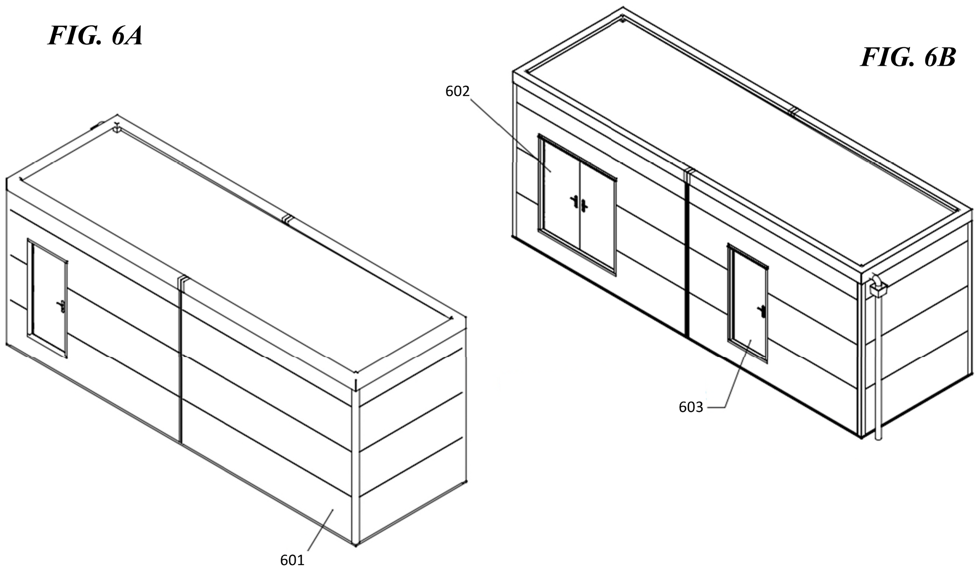

FIGS. 6A-6B show outer isometric views of an immersion training module according to some embodiments of the present disclosure. In some embodiments, the module can include a quadcore wall panel 601, a double 10-point locking security door 602, and a single 10-point locking security door 602. In some embodiments, the disclosed modules can be increased in size to cater for large scale training. They can also be linked physically or networked to enable even greater scale or dispersed training. The disclosed modules can be mobile solutions, which can allow training to be taken to the user and not be anchored to one location. Such a design greatly reduces or removes the current requirements for personnel, logistics, time, and costs of high value training. For example, the disclosed modules can be adapted to any real operational environment, such as defense and resilience organizations including, but not limited to, Army, Navy, Air Force, Police, Fire, National Resilience, Medical, Urban, Subterranean, Command and Control and HQ formats.

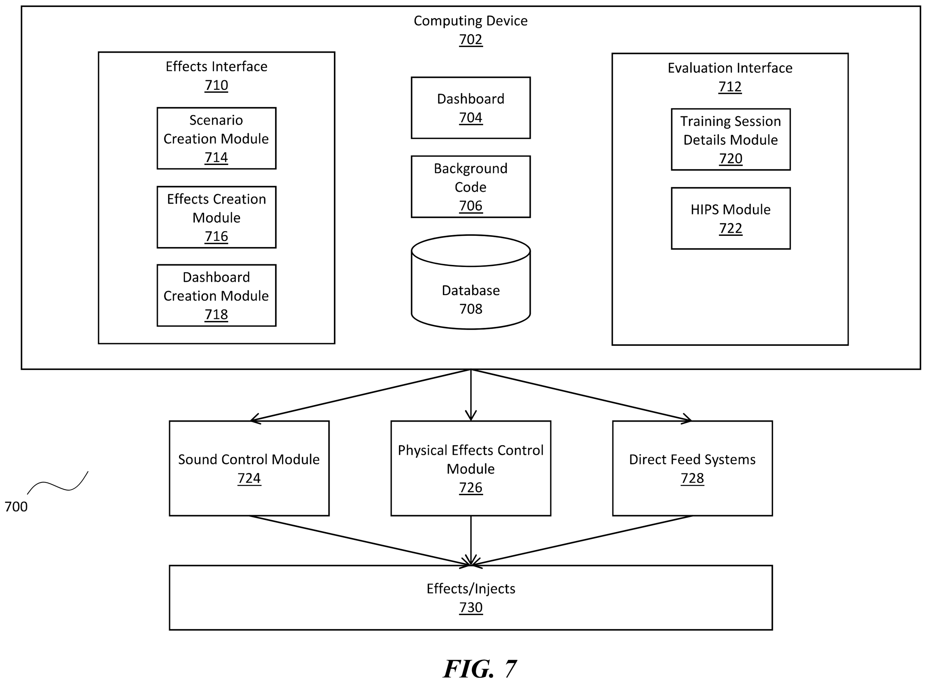

FIG. 7 is a block diagram of an example immersion control system 700 according to some embodiments of the present disclosure. In some embodiments, the system 700 can include a computing device 702 that can reside within a control room of the disclosed modules. The computing device 702 can be accessible by various users functioning as operators to control and evaluate a trainee completing a task at a workstation within a training room.

In some embodiments, the computing device 702 can include an effects interface 710, an evaluation interface 712, a dashboard 704, background code 706, and a database 708. In addition, the system 700 can include a sound control module 724, a physical effects control module 726, direct feed systems 728, and ultimate effects/injects 730 within the training room.

In some embodiments, the dashboard 704 can show live sessions, participant information, and stats and other live data of trainees during training. In some embodiments, the database 708 can store and maintain the captured and harnessed data from training sessions.

In some embodiments, the effects interface 710 can include a scenario creation module 714, an effects creation module 716, and a dashboard creation module 718. The scenario creation module 714 can enable an operator to add atmospherics and injects to the training room. In addition, the scenario creation module 714 can enable the operator to add dashboard items to the dashboard 704. In some embodiments, the effects creation module 716 can enable the operator to create both single effects and combined effects. For example, a single effect can be simply the addition of a sound via spatial audio units within the training room. In addition, a combined effect can be a combination of effects to simulate an event occurring. For example, a combination of sound, seismic vibrations, lighting, and burning smells can be coordinated together to simulate an explosion. Moreover, this combined effect can be saved as a predefined scenario within the database 708 such that it can be accessed in the future by the background code 706. In some embodiments, the dashboard creation module 718 can enable the operator to create buttons and change layouts of their evaluation views.

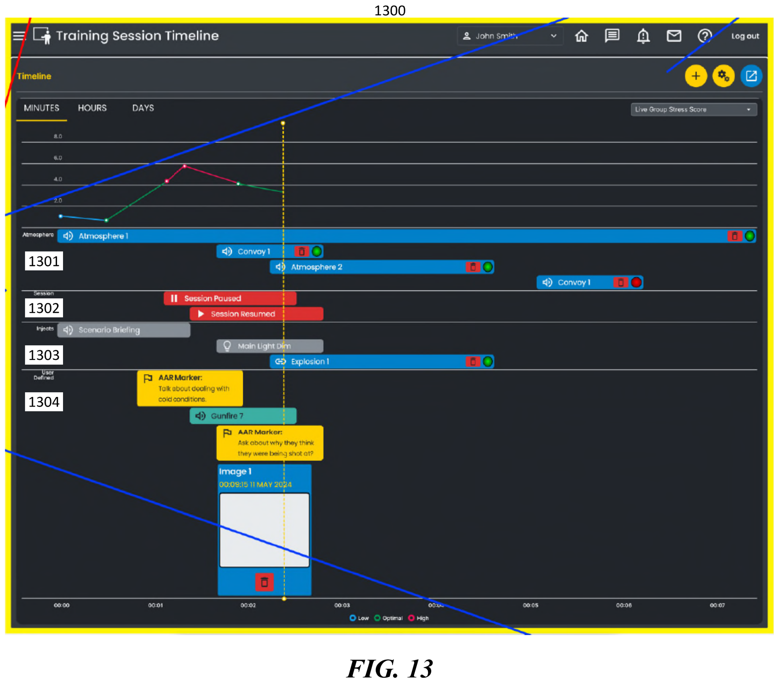

In some embodiments, the evaluation interface 712 can include a training session details module 720 and a human insight and performance system (HIPS) module 722. In some embodiments, the training session details module 720 can display training session details; enable an operator to play, pause, and stop a training session; visualize injects applied to the training room; and view dashboard terms. In addition, the HIPS module 722 can display biometric information, individual profiles of trainees within the training room, and stress information. Additional details related to the HIPS module 722 are discussed in relation to FIGS. 9 and 13.

As an operator controls effects and the training overall via the computing device 702, their selections and resulting control signals can be transmitted to the sound control module 724 to initiate the selected sound effects and to the physical effects control module 726 to initiate the selected physical effects. Moreover, the direct feed systems 728 can enable the capture and harnessing of training data from the training room such that it is fed back to the computing device 702 for analysis and evaluation.

FIG. 8 is a flowchart of an example process 800 for controlling an immersion training module according to some embodiments of the present disclosure. In some embodiments, the process 800 can be performed by a processor on the computing device 702 or other computing device in a control room of an immersion training module. At block 801, the process 800 can include initiating an immersive training experience in a training room, such as at the request of an operator. Initiating the immersive training experience can include initiating a training task that a trainee may be completing on a workstation within the training room.

At block 802, the process 800 can include receiving input from the user (i.e., the operator) to control the environment in the training room. In some embodiments, as discussed above, the received input can be instructions to initiate a physical effects unit and a spatial audio unit located in the control room. For example, the physical effects units can include lighting units, seismic simulation units, smoke units, and other theatrical effects units. In some embodiments, the operator can select single effects to initiate. In some embodiments, the operator can also select a pre-defined combination of physical and spatial audio effects that combine to create a specific scenario, such as an explosion or a helicopter flying overhead. In some embodiments, the input can also include an input to alter a climate control system within the training room, such as by altering the temperature and/or humidity.

At block 803, the process 800 can include activating the physical effects unit and spatial audio unit based on the input to implement the selected effects. For example, the process 800 can include activating the seismic simulation units, audio units, smoke units, lighting units, etc. In some embodiments, when a pre-defined combination of effects is selected, the different units may be activated in conjunction with another to achieve the desired scenario. This can include activating the units simultaneously or based on pre-defined time spacings to achieve the desired scenario.

At block 804, the process 800 can include receiving audio and video data feeds and biometric data from the training room. In some embodiments, the receiving of audio and video data feeds and the biometric data can be performed live and in a continuous manner during the training session that has bene initiated. At block 805, the process 800 can include displaying data on a user interface of the computing device 702 in the control room. In some embodiments, displaying the data on the user interface can include synchronizing the received data feeds and displaying the synchronized feeds in the control room. In some embodiments, the display can utilize a timeline view (see FIG. 13). In addition, in some embodiments, the display that is shown to the operator on the user interface can include various stress scores, the details of which are discussed in relation to FIG. 9 below.

FIG. 9 is a flowchart of an example process 900 for generating training recommendations according to some embodiments of the present disclosure. At block 901, the process 900 can include receiving heartrate data from a biometric sensor worn by the user that is completing the training task in the training room. At block 902, the process 900 can include identifying a maximum heartrate (e.g., from the database 708) associated with the trainee. At block 903, the process 900 can include identifying a resting heartrate (e.g., from the database 708) associated with the trainee. At block 904, the process 900 can include calculating a stress score for the user completing the training task based on the measured heartrate, the identified maximum heartrate, and the identified resting heartrate. In some embodiments, the stress score can be calculated using Equation 1, shown below:

$$(1) \; stress = 10(\frac{(HR - HR_{rest})}{(HR\_\max - HR_{rest})})^{\frac{1}{y}}.$$

where y can be learned by various training and finetuning techniques. In some embodiments, the stress score can be between 1 and 10, where 10 corresponds to high stress being experienced by the user. At block 905, the process 900 can include generating a training recommendation based on the calculated stress score. For example, for a low stress score (e.g., between 0 and 2), the system can recommend increasing the intensity of the training, such as by initiating more intense or additional effects in the training room. For a medium stress score (e.g., between 2 and 5), the system can recommend maintaining the current intensity of the training. For a high stress score (e.g., between 5 and 10), the system can recommend reducing the intensity.

In some embodiments, when a team of users are completing a team training exercise within the training room, the method can calculate and aggregate stress scores of all of the trainees and calculate an aggregated stress score for the group, which is displayed to the operator. In some embodiments, the aggregated score can be an average score of each of the individual trainee scores. In some embodiments, the training recommendations can be based on the aggregate score.

In some embodiments, after the training recommendations have been displayed to an operator within the control room, the operator generally can decide manually whether to adjust the intensity of the training session by altering or changing the effects that are being activated and initiated within the training room. However, in some embodiments, the system can automatically adjust the intensity of the training session based on the live stress score for the individual or group trainees.

FIGS. 10-13 show example user interfaces of an immersion control system according to some embodiments of the present disclosure. FIG. 10 shows an example control user interface 1000 that can be displayed within the effects interface 710. Within the user interface 1000, there is a light control section 1001, a physical effects control section 1002, a combined effects control section 1003, a nasal effects control section 1004, and an audio effects control section 1005. The light control section 1001 enables an operator, from within the control room, to control pendant lights or all lights within the training room. The physical effects control section 1002 enables the operator to control various physical effects within the training room, such as hazer power, lighting power, twitchers, etc. The nasal effects control section 1004 enables the operator to initiate various aromas, such as burning tires, sewer aromas, a musty aroma, etc. In addition, the user interface 1000 can include a monitoring section 1006 that provides a live camera feed of the trainees within the training room. Finally, the user interface 1000 can include training control options in section 1007 that include stopping, pausing, recording, etc.

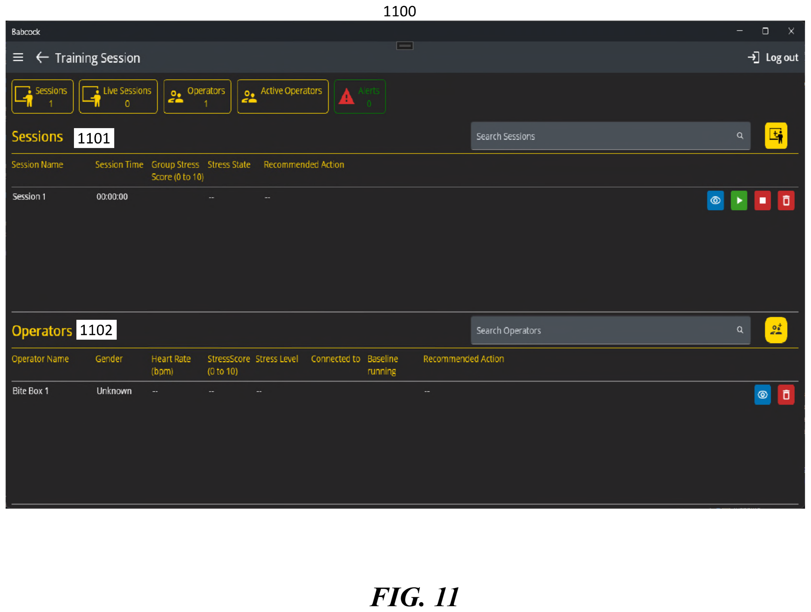

FIG. 11 shows an example training sessions user interface 1100 that can be displayed within the evaluation interface 712. The training session user interface 1100 allows an operator to view a sessions listing 1101 for active training sessions and an operators listing 1102 for active operators and modules.

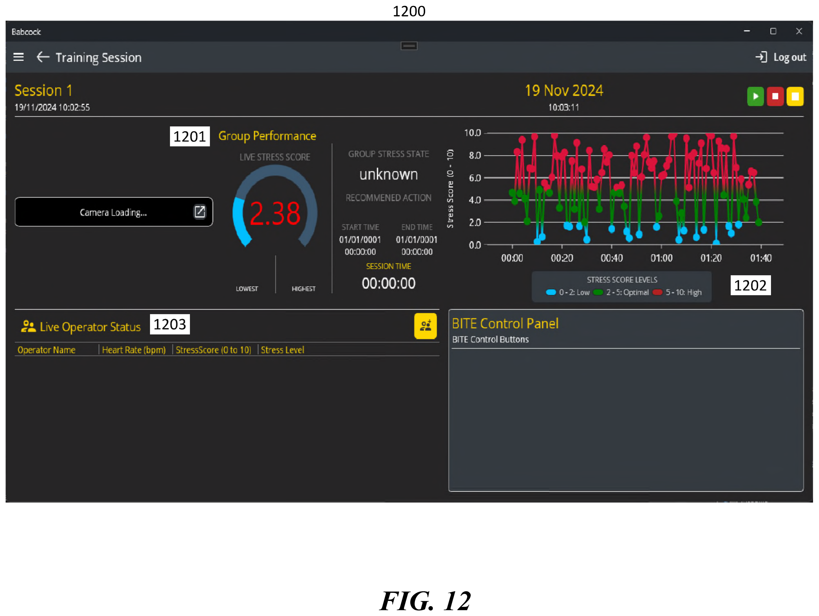

FIG. 12 shows an example live session user interface 1200. In particular, the user interface 1200 can include a group performance section 1201 that displays a live stress score for the group; such a stress score can be calculated according to the techniques as described herein. In section 1202, the user interface 1200 can display a plot that illustrates how the group's stress score has changed over time. In some embodiments, the stress score plot can be color-coded to indicate the levels of stress. In addition, the user interface 1200 can include a live operator status section 1201 that allows an operator to be selected individually, rather than as a group.

FIG. 13 shows an example training session timeline user interface 1300. In the interface 1300, the effects and customized feedback that the operator (from the control room) has added are shown in a chronological timeline view. In particular, the timeline can include an atmosphere section 1301 that displays the atmospheric effects triggered during the training session. For example, the "convoy 1" effect can be a pre-defined configuration of effects that an operator triggered. The timeline can also include the training session section 1302 that indicates whether the trainee's training session is active or has been paused. Moreover, the timeline can include an injects section 1303 and a user defined section 1304. In the user defined section 1304, the interface 1300 can include custom flags and comments added by the operator while viewing and evaluating the training session of the trainee.

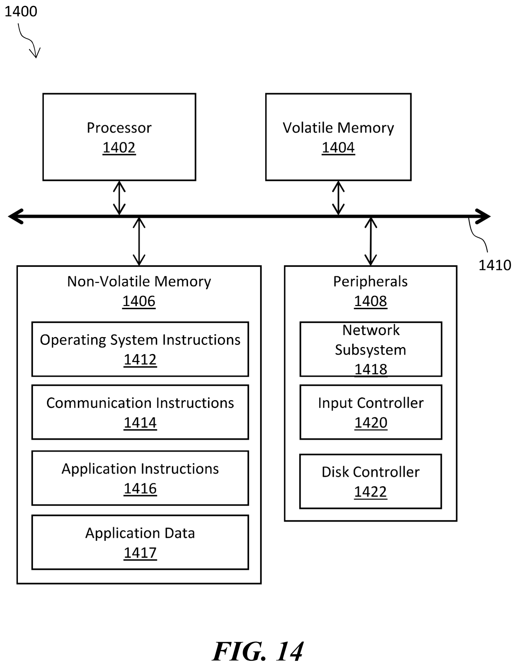

FIG. 14 is a diagram of an example server device 1400 that can be used within system 700 of FIG. 7. Server device 1400 can implement various features and processes as described herein. Server device 1400 can be implemented on any electronic device that runs software applications derived from complied instructions, including without limitation personal computers, servers, smart phones, media players, electronic tablets, game consoles, email devices, etc. In some implementations, server device 1400 can include one or more processors 1402, volatile memory 1404, non-volatile memory 1406, and one or more peripherals 1408. These components can be interconnected by one or more computer buses 1410.

Processor(s) 1402 can use any known processor technology, including but not limited to graphics processors and multi-core processors. Suitable processors for the execution of a program of instructions can include, by way of example, both general and special purpose microprocessors, and the sole processor or one of multiple processors or cores, of any kind of computer. Bus 1410 can be any known internal or external bus technology, including but not limited to ISA, EISA, PCI, PCI Express, USB, Serial ATA, or FireWire. Volatile memory 1404 can include, for example, SDRAM. Processor 1402 can receive instructions and data from a read-only memory or a random access memory or both. Essential elements of a computer can include a processor for executing instructions and one or more memories for storing instructions and data.

Non-volatile memory 1406 can include by way of example semiconductor memory devices, such as EPROM, EEPROM, and flash memory devices; magnetic disks such as internal hard disks and removable disks; magneto-optical disks; and CD-ROM and DVD-ROM disks. Non-volatile memory 1406 can store various computer instructions including operating system instructions 1412, communication instructions 1414, application instructions 1416, and application data 1417. Operating system instructions 1412 can include instructions for implementing an operating system (e.g., Mac OS®, Windows®, or Linux). The operating system can be multi-user, multiprocessing, multitasking, multithreading, real-time, and the like. Communication instructions 1414 can include network communications instructions, for example, software for implementing communication protocols, such as TCP/IP, HTTP, Ethernet, telephony, etc. Application instructions 1416 can include instructions for various applications. Application data 1417 can include data corresponding to the applications.

Peripherals 1408 can be included within server device 1400 or operatively coupled to communicate with server device 1400. Peripherals 1408 can include, for example, network subsystem 1418, input controller 1420, and disk controller 1422. Network subsystem 1418 can include, for example, an Ethernet of WiFi adapter. Input controller 1420 can be any known input device technology, including but not limited to a keyboard (including a virtual keyboard), mouse, track ball, and touch-sensitive pad or display. Disk controller 1422 can include one or more mass storage devices for storing data files; such devices include magnetic disks, such as internal hard disks and removable disks; magneto-optical disks; and optical disks.

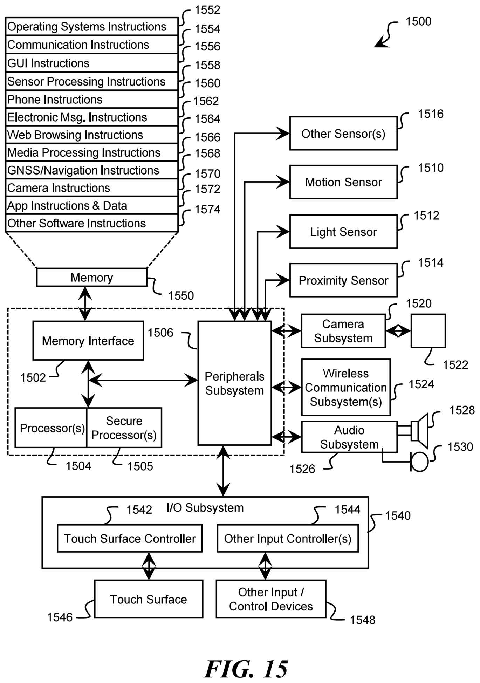

FIG. 15 is an example computing device that can be used within the system 700 of FIG. 7, according to an embodiment of the present disclosure. The illustrative user device 1500 can include a memory interface 1502, one or more data processors, image processors, central processing units 1504, and or secure processing units 1505, and peripherals subsystem 1506. Memory interface 1502, one or more central processing units 1504 and or secure processing units 1505, and or peripherals subsystem 1506 can be separate components or can be integrated in one or more integrated circuits. The various components in user device 1500 can be coupled by one or more communication buses or signal lines.

Sensors, devices, and subsystems can be coupled to peripherals subsystem 1506 to facilitate multiple functionalities. For example, motion sensor 1510, light sensor 1512, and proximity sensor 1514 can be coupled to peripherals subsystem 1506 to facilitate orientation, lighting, and proximity functions. Other sensors 1516 can also be connected to peripherals subsystem 1506, such as a global navigation satellite system (GNSS) (e.g., GPS receiver), a temperature sensor, a biometric sensor, magnetometer, or other sensing device, to facilitate related functionalities.

Camera subsystem 1520 and optical sensor 1522, e.g., a charged coupled device (CCD) or a complementary metal-oxide semiconductor (CMOS) optical sensor, can be utilized to facilitate camera functions, such as recording photographs and video clips. Camera subsystem 1520 and optical sensor 1522 can be used to collect images of a user to be used during authentication of a user, e.g., by performing facial recognition analysis.

Communication functions can be facilitated through one or more wired and or wireless communication subsystems 1524, which can include radio frequency receivers and transmitters and or optical (e.g., infrared) receivers and transmitters. For example, the Bluetooth (e.g., BLE) and or WiFi communications described herein can be handled by wireless communication subsystems 1524. The specific design and implementation of communication subsystems 1524 can depend on the communication network(s) over which the user device 1500 is intended to operate. For example, user device 1500 can include communication subsystems 1524 designed to operate over a GSM network, a GPRS network, an EDGE network, a WiFi or WiMax network, and a Bluetooth™ network. For example, wireless communication subsystems 1524 can include hosting protocols such that device 1500 can be configured as a base station for other wireless devices and or to provide a WiFi service.

Audio subsystem 1526 can be coupled to speaker 1528 and microphone 1530 to facilitate voice-enabled functions, such as speaker recognition, voice replication, digital recording, and telephony functions. Audio subsystem 1526 can be configured to facilitate processing voice commands, voice-printing, and voice authentication, for example.

I/O subsystem 1540 can include a touch-surface controller 1542 and or other input controller(s) 1544. Touch-surface controller 1542 can be coupled to a touch-surface 1546. Touch-surface 1546 and touch-surface controller 1542 can, for example, detect contact and movement or break thereof using any of a plurality of touch sensitivity technologies, including but not limited to capacitive, resistive, infrared, and surface acoustic wave technologies, as well as other proximity sensor arrays or other elements for determining one or more points of contact with touch-surface 1546.

The other input controller(s) 1544 can be coupled to other input/control devices 1548, such as one or more buttons, rocker switches, thumb-wheel, infrared port, USB port, and or a pointer device such as a stylus. The one or more buttons (not shown) can include an up/down button for volume control of speaker 1528 and or microphone 1530.

In some implementations, a pressing of the button for a first duration can disengage a lock of touch-surface 1546; and a pressing of the button for a second duration that is longer than the first duration can turn power to user device 1500 on or off. Pressing the button for a third duration can activate a voice control, or voice command, module that enables the user to speak commands into microphone 1530 to cause the device to execute the spoken command. The user can customize a functionality of one or more of the buttons. Touch-surface 1546 can, for example, also be used to implement virtual or soft buttons and or a keyboard.

In some implementations, user device 1500 can present recorded audio and or video files, such as MP3, AAC, and MPEG files. In some implementations, user device 1500 can include the functionality of an MP3 player, such as an iPod™. User device 1500 can, therefore, include a 36-pin connector and or 8-pin connector that is compatible with the iPod. Other input/output and control devices can also be used.

Memory interface 1502 can be coupled to memory 1550. Memory 1550 can include highspeed random access memory and or non-volatile memory, such as one or more magnetic disk storage devices, one or more optical storage devices, and or flash memory (e.g., NAND, NOR). Memory 1550 can store an operating system 1552, such as Darwin, RTXC, LINUX, UNIX, OS X, Windows, or an embedded operating system such as VxWorks.

Operating system 1552 can include instructions for handling basic system services and for performing hardware dependent tasks. In some implementations, operating system 1552 can be a kernel (e.g., UNIX kernel). In some implementations, operating system 1552 can include instructions for performing voice authentication.

Memory 1550 can also store communication instructions 1554 to facilitate communicating with one or more additional devices, one or more computers and or one or more servers. Memory 1550 can include graphical user interface instructions 1556 to facilitate graphic user interface processing; sensor processing instructions 1558 to facilitate sensor-related processing and functions; phone instructions 1560 to facilitate phone-related processes and functions; electronic messaging instructions 1562 to facilitate electronic messaging-related process and functions; web browsing instructions 1564 to facilitate web browsing-related processes and functions; media processing instructions 1566 to facilitate media processing-related functions and processes; GNSS/Navigation instructions 1568 to facilitate GNSS and navigation-related processes and instructions; and or camera instructions 1570 to facilitate camera-related processes and functions.

Memory 1550 can store application (or "app") instructions and data 1572, such as instructions for the apps described above in the context of FIGS. 7-13. Memory 1550 can also store other software instructions 1574 for various other software applications in place on device 400.

The described features can be implemented in one or more computer programs that can be executable on a programmable system including at least one programmable processor coupled to receive data and instructions from, and to transmit data and instructions to, a data storage system, at least one input device, and at least one output device. A computer program is a set of instructions that can be used, directly or indirectly, in a computer to perform a certain activity or bring about a certain result. A computer program can be written in any form of programming language (e.g., Objective-C, Java), including compiled or interpreted languages, and it can be deployed in any form, including as a stand-alone program or as a module, component, subroutine, or other unit suitable for use in a computing environment.

Suitable processors for the execution of a program of instructions can include, by way of example, both general and special purpose microprocessors, and the sole processor or one of multiple processors or cores, of any kind of computer. Generally, a processor can receive instructions and data from a read-only memory or a random access memory or both. The essential elements of a computer may include a processor for executing instructions and one or more memories for storing instructions and data. Generally, a computer may also include, or be operatively coupled to communicate with, one or more mass storage devices for storing data files; such devices include magnetic disks, such as internal hard disks and removable disks; magneto-optical disks; and optical disks. Storage devices suitable for tangibly embodying computer program instructions and data may include all forms of non-volatile memory, including by way of example semiconductor memory devices, such as EPROM, EEPROM, and flash memory devices; magnetic disks such as internal hard disks and removable disks; magneto-optical disks; and CD-ROM and DVD-ROM disks. The processor and the memory may be supplemented by, or incorporated in, ASICs (application-specific integrated circuits).

To provide for interaction with a user, the features may be implemented on a computer having a display device such as an LED or LCD monitor for displaying information to the user and a keyboard and a pointing device such as a mouse or a trackball by which the user may provide input to the computer.

The features may be implemented in a computer system that includes a back-end component, such as a data server, or that includes a middleware component, such as an application server or an Internet server, or that includes a front-end component, such as a client computer having a graphical user interface or an Internet browser, or any combination thereof. The components of the system may be connected by any form or medium of digital data communication such as a communication network. Examples of communication networks include, e.g., a telephone network, a LAN, a WAN, and the computers and networks forming the Internet.

The computer system may include clients and servers. A client and server may generally be remote from each other and may typically interact through a network. The relationship of client and server may arise by virtue of computer programs running on the respective computers and having a client-server relationship to each other.

One or more features or steps of the disclosed embodiments may be implemented using an application programming interface (API). An API may define one or more parameters that are passed between a calling application and other software code (e.g., an operating system, library routine, function) that provides a service, that provides data, or that performs an operation or a computation.

The API may be implemented as one or more calls in program code that send or receive one or more parameters through a parameter list or other structure based on a call convention defined in an API specification document. A parameter may be a constant, a key, a data structure, an object, an object class, a variable, a data type, a pointer, an array, a list, or another call. API calls and parameters may be implemented in any programming language. The programming language may define the vocabulary and calling convention that a programmer will employ to access functions supporting the API.

In some implementations, an API call may report to an application the capabilities of a device running the application, such as input capability, output capability, processing capability, power capability, communications capability, etc.

While various embodiments have been described above, it should be understood that they have been presented by way of example and not limitation. It will be apparent to persons skilled in the relevant art(s) that various changes in form and detail may be made therein without departing from the spirit and scope. In fact, after reading the above description, it will be apparent to one skilled in the relevant art(s) how to implement alternative embodiments. For example, other steps may be provided, or steps may be eliminated, from the described flows, and other components may be added to, or removed from, the described systems. Accordingly, other implementations are within the scope of the following claims.

In addition, it should be understood that any figures which highlight the functionality and advantages are presented for example purposes only. The disclosed methodology and system are each sufficiently flexible and configurable such that they may be utilized in ways other than that shown.

Features which are described in the context of separate embodiments may also be provided in combination in a single embodiment. Features which are, for brevity, described in the context of a single embodiment, may also be provided separately or in any suitable subcombination, or combined as new embodiments. The applicant hereby gives notice that new claims may be formulated to one or more features and/or combinations of such features during the prosecution of the present application or of any further application derived therefrom. Feature(s) of the system(s) and/or computing system(s) described may be incorporated into/used in corresponding methods and vice versa.

Although the term "at least one" may often be used in the specification, claims and drawings, the terms "a", "an", "the", "said", etc. also signify "at least one" or "the at least one" in the specification, claims and drawings.

Finally, it is the applicant's intent that only claims that include the express language "means for" or "step for" be interpreted under 35 U.S.C. 112(f). Claims that do not expressly include the phrase "means for" or "step for" are not to be interpreted under 35 U.S.C. 112(f).

**Claims**

1.  A system for providing immersive training experiences comprising:

    a training room comprising:

      one or more physical effects units configured to apply physical effects to the training room;
      one or more spatial audio units configured to apply spatial audio to the training room;
      one or more audio capture units;
      one or more video recording units; and
      a workstation accessible by a first user to complete a training task; and

    a control room comprising:

      an effects interface configured to allow a second user to control the one or more physical effects units and the one or more spatial audio units;
      an evaluation interface configured to receive and display data feeds from the one or more audio capture units and the one or more video recording units.

2.  The system of claim 1, wherein the one or more physical effects units comprise at least one of a seismic simulation unit, an odor effects unit, a theatrical effects unit, a lighting unit, or a smoke creation unit.

3. The system of claim 1, wherein the training room is located adjacent to and borders the control room; and, optionally, wherein the training room borders the control room via a soundproof wall.

4. The system of claim 1, wherein:

the control room further comprises a climate control system; and
the effects interface is configured to allow the second user to control the climate control system.

5. The system of claim 1, wherein the one or more video recording units comprise a camera capable of vision in complete darkness either by infrared illumination, thermal, or a combination of both.

6. A method for providing immersive training experiences comprising:

initiating, by a controller in a control room, an immersive training experience in a training room comprising a workstation accessible by a first user to complete a training task;
receiving, by the controller, an input from a second user to control a physical effects unit and a spatial audio unit in the training room;
activating, by the controller, the physical effects unit and the spatial audio unit based on the input;
receiving, by the controller, data feeds from an audio capture unit and a video recording unit in the training room; and
displaying, by the controller, the data feeds on a user interface in the control room.

7. The method of claim 6 comprising:

synchronizing, by the controller, the received data feeds; and
displaying, by the controller, the synchronized data feeds on the user interface in the control room.

8. The method of claim 7, wherein displaying, by the controller, the synchronized data feeds on the user interface in the control room comprises compiling the synchronized data feeds into a timeline view.

9. The method of claim 6, wherein receiving the input from the second user to control the physical effects unit and the spatial audio unit in the training room comprises receiving a selection of a scenario definition, the scenario definition comprising a pre-defined combination of physical and spatial audio effects.

10. The method of claim 6, further comprising:

generating, by the controller, a training recommendation for the first user based on the data feeds; and
displaying, by the controller, the training recommendation on the user interface in the control room.

11. A computing system comprising:

a processor; and
a non-transitory computer-readable storage device storing computer-executable instructions, the instructions when executed by the processor cause the processor to perform operations comprising:

initiating, by a controller in a control room, an immersive training experience in a training room comprising a workstation accessible by a first user to complete a training task;
receiving, by the controller, an input from a second user to control a physical effects unit and a spatial audio unit in the training room;
activating, by the controller, the physical effects unit and the spatial audio unit based on the input;
receiving, by the controller, data feeds from an audio capture unit and a video recording unit in the training room;
synchronizing, by the controller, the received data feeds; and
displaying, by the controller, the synchronized data feeds on a user interface in the control room.

12. The computing system of claim 11, wherein the operations further comprise:

synchronizing, by the controller, the received data feeds; and
displaying, by the controller, the synchronized data feeds on the user interface in the control room.

13. The computing system of claim 12, wherein displaying, by the controller, the synchronized data feeds on the user interface in the control room comprises compiling the synchronized data feeds into a timeline view.

14. The computing system of claim 11, wherein receiving the input from the second user to control the physical effects unit and the spatial audio unit in the training room comprises receiving a selection of a scenario definition, the scenario definition comprising a pre-defined combination of physical and spatial audio effects.

15. The computing system of claim 11, wherein the operations further comprise:

generating, by the controller, a training recommendation for the first user based on the data feeds; and
displaying, by the controller, the training recommendation on the user interface in the control room.

EP 4 756 782 A1

**FIG. 1**

*FIG. 2*

FIG. 3

*FIG. 4*

*FIG. 5*

500

FIG. 6A

FIG. 6B

602

603

601

EP 4 756 782 A1

EP 4 756 782 A1

**Computing Device**
**702**

Effects Interface
710

Scenario Creation Module
714

Effects Creation Module
716

Dashboard Creation Module
718

Dashboard
704

Background Code
706

Database
708

Evaluation Interface
712

Training Session Details Module
720

HIPS Module
722

Sound Control Module
724

Physical Effects Control Module
726

Direct Feed Systems
728

700

Effects/Injects
730

*FIG. 7*

EP 4 756 782 A1

800

801 — Initiate immersive training experience in a training room

802 — Receive input from user to control environment in training room

803 — Activate physical effects unit and spatial audio unit

804 — Receive audio/video data feeds and biometric data

805 — Display data on user interface in control room

*FIG. 8*

*FIG. 9*

EP 4 756 782 A1

1000

**Babcock**

**BITE Control Panel: US Bite Box**
Control effects and box operations.

**Light Controls** ⌄ 1001

**Physical Effects** ⌄ 1002

| ⚪ Pendant Lights |
| ⚪ All Lights |

| ⚠ Shelf 1 |
| ⚠ Hazer |
| ⚠ Hazer Power |
| ⚠ Lighting Power |
| ⚠ Ventilation Fan |
| ⚠ Light Twitchers |

**Combined Effects** ⌄ 1003

**Audio Effects** ❯ 1005

**Nasal Effects** ⌄ 1004

| ☁ Sewer Aroma |
| ☁ Burning Tyre's Aroma |
| ☁ Musty Aroma |

**Monitoring** 1006
Camera Feed

09:30:15

1007

**STOP**

| Start Recording | Stop Recording |
| Sound Check | End All Sound |

*FIG. 10*

FIG. 11

1200

**FIG. 12**

FIG. 13

*FIG. 14*

EP 4 756 782 A1

*FIG. 15*

| Europäisches Patentamt / European Patent Office / Office européen des brevets | **EUROPEAN SEARCH REPORT** | **Application Number**<br>EP 25 21 8470 |
|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2022/162368 A1 (4GD LTD [GB]) 4 August 2022 (2022-08-04) * paragraphs [0003], [0034], [0051], [0063], [0077] - [0092], [0105] - [0106], [0117] - paragraphs [0123], [0133] - [0139], [0149], [0155] - [0166], [0177], [0201]; figures 1-22 * | 1-15 | INV. G09B9/00 |
| X | WO 2024/199422 A1 (UNIV HONG KONG POLYTECHNIC [CN]) 3 October 2024 (2024-10-03) * paragraphs [0012] - [0029] - paragraphs [0054] - [0140]; figures 1-19 * | 1-15 | |

**TECHNICAL FIELDS SEARCHED (IPC)**

G09B

The present search report has been drawn up for all claims

| Place of search | Date of completion of the search | Examiner |
|---|---|---|
| Munich | 17 April 2026 | Bîrlescu, V |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

This annex lists the patent family members relating to the patent documents cited in the above-mentioned European search report.
The members are as contained in the European Patent Office EDP file on
The European Patent Office is in no way liable for these particulars which are merely given for the purpose of information.

17-04-2026

| Patent document cited in search report | Publication date | Patent family member(s) | | Publication date |
|---|---|---|---|---|
| WO 2022162368 A1 | 04-08-2022 | AU | 2022214413 A1 | 14-09-2023 |
| | | CA | 3205700 A1 | 04-08-2022 |
| | | EP | 4285352 A1 | 06-12-2023 |
| | | GB | 2603138 A | 03-08-2022 |
| | | US | 2024087469 A1 | 14-03-2024 |
| | | WO | 2022162368 A1 | 04-08-2022 |
| WO 2024199422 A1 | 03-10-2024 | CN | 121039601 A | 28-11-2025 |
| | | WO | 2024199422 A1 | 03-10-2024 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 63729128